# EUROPEAN PATENT APPLICATION

(11) **EP 3 885 025 A1**
(43) Date of publication of application: **29.09.2021**
(21) Application number: 20169212.6
(22) Date of filing: 10.04.2020
(51) Int. Cl.: B01D 39/16

(54) **FILTERING ELEMENT**

(30) Priority: 26.03.2020 IT 202000006430
(71) Applicant: Nanoprom Chemicals S.r.l., 42013 Casalgrande (RE) (IT)
(72) Inventor: FALLETI, Gian Luca, 42013 CASALGRANDE (RE) (IT)
(74) Representative: Casciano, Lidia Giulia Rita

(57) **Abstract**

A filtering element (1) is provided for filtering a fluid contaminated by pathogens and/or fine powders made of nonwoven tissue and provided with a first outer surface (2) and a second inner surface (3) wherein said at least an outer surface (2) is treated with a coating composition comprising: 15-40% by weight of amorphous inorganic silicon; 20-80% by weight of ethyl acetate or butyl acetate; 2-5% by weight of polyester resin; of the total weight of the composition. An individual protection device (5) and a surgical mask comprising the filtering element (1) are further provided.

## Description

### CROSS-REFERENCE TO RELATED APPLICATIONS

This patent application claims priority from Italian patent application no. 102020000006430 filed on 26/03/2020.

### TECHNICAL FIELD

The present invention relates to a filtering element. The filtering element may be used for filtering fine powders and pathogens in a fluid, in particular in the air, for example for use in individual protection devices in case of heath emergencies.

### BACKGROUND ART

It is known using disposable surgical masks in the operating theatre to avoid spreading germs during surgery. Typical surgical masks consist of an expandable and air-proof filter and of two sets of straps. The mask is fixed over the nose and the mouth of the user by tying the two sets of straps round the head and the neck or by means of elastic bands. The mask generally also comprises a thin metal band extending along the upper edge. The band is pressed around the nose of the user to obtain a better wearability when the mask is worn.

Traditional surgical masks are formed by two or three layers of non-woven tissue (TNT) consisting of polyester or polypropylene fibres. Typically, the outwardly exposed layer consists of a "spunbonded" type of TNT (namely a non-woven tissue obtained by melting the polymer composing it at an optimal temperature, which is then spun with extruders and spread in a continuous thread so that threads are randomly laid across. Finally a heated cylinder makes fibres bind between each other) with a possible hydrophobic treatment, which has the function to provide the mask with mechanical strength and a certain water and environmental humidity resistance. The intermediate layer consists of TNT made by "melt blown" technology (obtained by extruding melt polymer fibres through a spin web for forming long and thin fibres which are then cooled with hot air) and consisting of microfibres having a diameter of 1-3 microns; this layer plays the filtering role. A possible third layer, typically in spun bond, is in contact with the face and protects the skin from the filtering layer.

The filtering capacity of these masks is almost complete towards the outside (higher than 95% for bacteria), while they have a low filtering capacity from the outside towards the wearer, about 20%, mainly due to the poor face adherence.

However such surgical masks do not guarantee a high protection from pathogens coming from outside, as they do not retain fine and very fine particles generated, for example, by an aerosol.

Other types of masks for filtering fine particles and powders or aerosol, so called individual protection devices, are made of non-woven tissues with different properties and features.

The outer layer of the mask protects from higher-size particles, the intermediate layer is usually made of melt blown tissue and filters smaller particles. The inner layer, contacting the face, has the double function of maintaining the shape of the mask and protecting it from moisture resulting from breath, cough or sneeze. The intermediate layer acts mechanically, as a sieve, for retaining particles up to a 10 micron diameter. Below these dimensions, the most important effect is the electrostatic one; the tissue fibres, electrostatically charged, attract and capture particles dispersed in the air.

In particular, these individual protection devices are graded in the FFP2 or FFP3 protection classes (filtering face piece 2 or 3, thus graded based on EN 149 standards)and are suitable for environments wherein the breathable air contains substances that are detrimental for health and that can cause genetic alterations. These devices must capture at least 94%-99% of the particles in the air up to dimensions of 0.6 µm. They are used in environments where the user comes into contact with aerosols, mists and fumes, which on a long-term basis cause the onset of respiratory diseases.

These devices adhere well to the user's face and are available in a version with or without valve.

In particular, the individual protection devices without valve are those having highest filtering capacity, as filtering pores are very small. However, they can be poorly tolerated by the wearer, as the exhaled air accumulates inside the mask, making the mask material humid and making breathing harder as a whole. Furthermore, the mask humidity reduces the inlet filtering power thereof, and consequently, they must be changed frequently.

By contrast the individual protection devices with valve make the wearer's breathing easier but they have a filtering capacity that is lower than those without valve. Furthermore, they protect the user from powders and pathogens present in the environment but they cannot filter the air exhaled towards the environment.

In the event of heath emergencies caused by particularly aggressive pathogens that can be transmitted through aerosols inhaled through the airways it is crucial that masks are not only able to avoid spreading pathogens from the environment to the user but also vice versa.

It is therefore perceived the need in the art of new technical solutions that can solve the aforementioned problem.

### DISCLOSURE OF INVENTION

The object of the present invention is thus to provide a new filtering element that is able to avoid the passage of water drops and small-sized pathogens not only when the user inhales but also when he exhales through such filtering element.

Such object is reached by a filtering element according to claim 1.

### BRIEF DESCRIPTION OF THE DRAWINGS

To better understand the present invention preferred embodiments thereof will be now described, for exemplary and non-limiting purposes, with reference to the appended claims, wherein:
- Figures 1 and 2 show a perspective view of the filtering element according to the invention; and
- Figure 3 shows an individual protection device which comprises the filtering element of the invention.

### BEST MODE FOR CARRYING OUT THE INVENTION

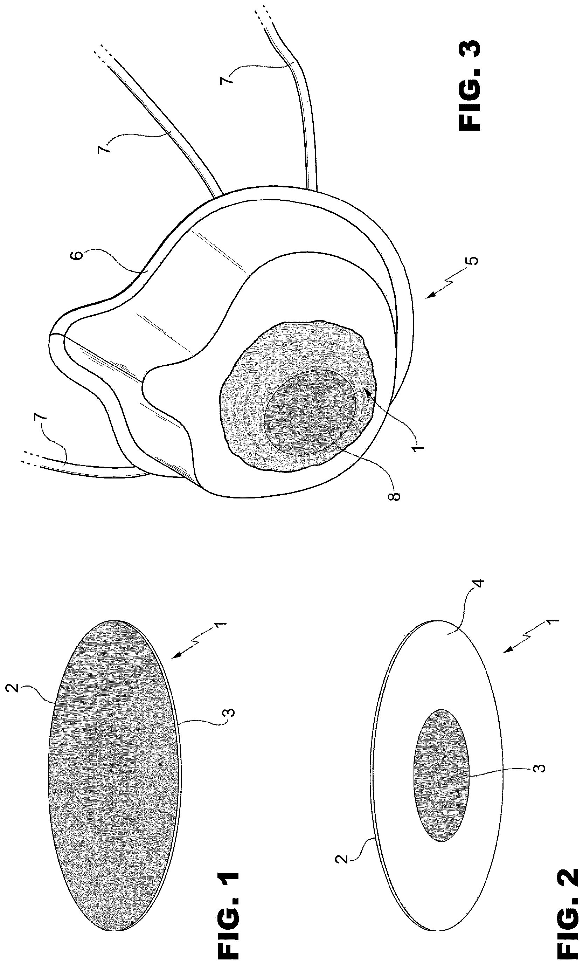

Figures 1 and 2 show a filtering element 1 made of non-woven tissue provided with one first outer surface 2 and with one second inner surface 3 wherein at least the first outer surface 2 is treated with a coating composition comprising:
15-40% by weight of amorphous inorganic silicon;
20-80% by weight of ethyl acetate or butyl acetate
2-5% by weight of polyester resin
   of the total weight of the composition.

Furthermore the coating composition may comprise 5 to 10% by weight of silanes and/or 5 to 10% by weight of siloxanes of the total weight of the composition.

In a preferred embodiment, the coating composition comprises:
15-30% by weight of inorganic silicon;
20-80% by weight of ethyl acetate or butyl acetate;
2-4% polyester resin,
   of the total weight of the composition.

Preferably the non-woven tissue is polyester or polypropylene.

In one embodiment, the filtering element has, on its second inner surface 3 an adhesive layer 4, for example arranged along the perimeter of the filtering element, which allows the application thereof on a filtering surface.

For example, the filtering element 1 may be used in an individual protection device. In figure 3 a known-type individual protection device 5 comprising a protective element 6 conformed such as to cover the mouth and the nose of the user is illustrated. Such device 5 further comprises retention means 7, for example elastic means, connected in a known way to the protective element 6 and adapted to ensure that the device correctly adheres to the user's face, for example positioning elastics behind the user's ears.

The device 5 is also provided with a valve 8 of the type able to allow filtering the air inhaled by the user but not filtering the exhaled air. On such valve 8 the filtering element 1 of the invention is applied such that the adhesive layer 4 present on the second inner surface 3 adheres on the valve 8 while the first outer surface 2 is directed to the outer environment.

In alternative, the filtering element 1 can also be integrated inside the valve 8 of the device 5 so as to create an additional barrier against the inlet and outlet of pathogens and fine powders.

Furthermore, the filtering element 1 may also be used as an outer layer for making surgical masks or be applied, in its version provided with adhesive, on surgical masks of the known type to increase the filtering capacity.

Advantageously, the filtering element of the invention allows filtering, in addition to the air inhaled by the user also air exhaled ensuring the protection of the user and of the surrounding environment.

It further demonstrates complete water repellency from water drops deposited on its surface treated with the coating composition. Therefore, such filtering element allows to avoid spreading even small-sized pathogens from the user towards the environment and vice versa.

## Claims

1. A filtering element (1) for filtering a fluid contaminated by pathogens and/or fine powders made of non-woven tissue and provided with a first outer surface (2) and a second inner surface (3) wherein said at least an outer surface (2) is treated with a coating composition comprising:
15-40% by weight of amorphous inorganic silicon;
20-80% by weight of ethyl acetate or butyl acetate;
2-5% by weight of polyester resin;
of the total weight of the composition.

2. The filtering element (1) according to claim 1, **characterized in that** said coating composition may also include 5 to 10% by weight of silanes and/or 5 to 10% by weight of siloxanes on the total weight of the composition.

3. The filtering element (1) according to claim 1 or 2, **characterized in that** said coating composition comprises:
15-30% by weight of inorganic silicon;
20-80% by weight of ethyl acetate or butyl acetate;
2-4% polyester resin,
of the total weight of the composition.

4. The filtering element (1) according to claim 1, **characterized in that** said second inner surface (3) is coated at least partially with an adhesive layer (4).

5. An individual protection device (5) for protecting a user airways comprising a protective element (6), retention means (7) adapted to ensure the correct positioning of the device for protecting the user airways, and a filtering element (1) according to any one of claims 1 to 4.

6. The individual protection device (5) according to claim 5, **characterized in that** it further comprises at least a valve (8) adapted to filter air inhaled by the user.

7. The individual protection device (5) according to claim 6, **characterized in that** said filtering element (1) is applied on said valve (8) by means of an adhesive layer (4).

8. A surgical mask comprising a filtering element (1) according to any one of claims 1 to 4.
